# EUROPÄISCHE PATENTSCHRIFT

(11) **EP 3 652 042 B1**
(45) Veröffentlichungstag und Bekanntmachung des Hinweises auf die Patenterteilung: **01.09.2021**
(21) Anmeldenummer: 18740774.7
(22) Anmeldetag: 09.07.2018
(51) Int. Cl.: B62D 5/00, B62D 6/00

(54) **STEER-BY-WIRE LENKSYSTEM MIT ADAPTIVER ZAHNSTANGENPOSITIONSREGELUNG**
STEER-BY-WIRE STEERING SYSTEM WITH ADAPTIVE RACK-AND-PINION POSITION ADJUSTMENT
SYSTÈME DE DIRECTION À COMMANDE PAR CÂBLE ÉLECTRIQUE À RÉGULATION ADAPTATIVE DE LA POSITION DE LA CRÉMAILLÈRE

(30) Priorität: 14.07.2017 DE 102017115850
(43) Veröffentlichungstag der Anmeldung: 20.05.2020
(73) Patentinhaber: thyssenkrupp Presta AG, 9492 Eschen (LI); thyssenkrupp AG, 45143 Essen (DE)
(72) Erfinder: LAPIS, Leonard, 9466 Sennwald (CH); ROHRMOSER, Manuel, 6712 Thüringen (AT)
(74) Vertreter: thyssenkrupp Intellectual Property GmbH
(86) Internationale Anmeldenummer: PCT/EP2018/068560
(87) Internationale Veröffentlichungsnummer: WO 2019/011867

(56) Entgegenhaltungen:
- EP-A1- 3 178 724
- DE-A1-102004 026 147
- DE-A1-102009 002 706
- DE-A1-102012 105 271

## Beschreibung

Die vorliegende Erfindung betrifft ein Verfahren zur Zahnstangenpositionsregelung für ein Steer-by-Wire-Lenksystem eines Kraftfahrzeuges mit den Merkmalen des Oberbegriffs des Anspruchs 1 und ein Verfahren zur Steuerung eines Steer-by-Wire-Lenksystems mit den Merkmalen des Oberbegriffs des Anspruchs 9, sowie ein Steer-by-Wire-Lenksystem mit den Merkmalen des Oberbegriffs des Anspruchs 10.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Eine mechanische Verbindung zu den Rädern ist nicht vorgesehen, sodass nach Betätigung des Lenkrads keine unmittelbare Kraft-Rückmeldung an den Fahrer übermittelt wird. Dadurch, dass die mechanische Verbindung zwischen den Rädern und dem Lenkrad entfällt, ist eine Positionsregelung der Zahnstange und damit der Räder erforderlich. Es ist wünschenswert die Positionsregelung der Zahnstange möglichst genau und frei von Störungen zu halten.

Aus der Offenlegungsschrift DE 10 2014 105 088 A1 ist ein Regler für ein elektromechanisches Lenksystem, bei dem eine frequenzabhängige Störungskompensation durchgeführt wird, bekannt. Der Regler ist dazu ausgebildet, einen Eingriff des Stellmotors unter Berücksichtigung von auf das Lenksystem einwirkenden Störungen zu regeln.

Die EP 3 006 306 A1 offenbart ein Verfahren für ein elektromechanisches Lenksystem mit einer Zahnstangenkraftschätzeinheit, die die Zahnstangenkraft basierend auf dem Lenkwinkel, der Lenkradgeschwindigkeit und weiteren Größen schätzt. Das Dokument DE102004026147 offenbart ein Verfahren gemäß dem Oberbegriff des Anspruchs 1.

Es ist Aufgabe der vorliegenden Erfindung, ein Verfahren und eine Vorrichtung zur Zahnstangenpositionsregelung in einem Steer-by-Wire Lenksystem anzugeben, die zuverlässig und genau die Zahnstangenposition regeln.

Diese Aufgabe wird von einem Verfahren zur Zahnstangenpositionsregelung in einem Steer-by-Wire Lenksystem eines Kraftfahrzeuges mit den Merkmalen des Anspruchs 1, einem Verfahren zur Steuerung eines Steer-by-Wire-Lenksystems für Kraftfahrzeuge mit den Merkmalen des Anspruchs 9 und einem Steer-by-Wire-Lenksystem für Kraftfahrzeuge mit den Merkmalen des Anspruchs 10 gelöst. In den Unteransprüchen sind vorteilhafte Weiterbildungen der Erfindung genannt.

Demnach ist ein Verfahren zur Zahnstangenpositionsregelung für ein Steer-by-Wire-Lenksystem für ein Kraftfahrzeug vorgesehen, das ein Modul zur Regelung einer Zahnstangenposition umfasst, das in einer Feedback-Struktur aus den Differenzen zwischen den Soll-Werten und Schätz-Werten der Zahnstangenposition und einer Zahnstangengeschwindigkeit einen Positionsfehler ermittelt, woraus eine Stellgröße für eine Ansteuerung einer Zahnstange bestimmt wird, wobei in einer Feedforward-Struktur eine Störgrößenkompensation der Stellgröße eines Lenkgetriebes durch Zahnstangenkraftschätzung erfolgt. Dieses Verfahren ermöglicht eine adaptive, agile und hochpräzise Zahnstangenpositionsregelung basierend auf einem einfachen physikalischen Lenkgetriebe-Modell. In der Feedforward-Struktur wird eine geschätzte Störgröße, beispielsweise eine geschätzte Störung in der Reifenrückstellkraft auf die Stellgröße zur Verstellung der Zahnstange addiert.

Es ist vorteilhaft, wenn in einer weiteren Feedforward-Struktur eine Reibungskraftkompensation der Stellgröße mittels Schätzung von Haftreibungs-Koeffizienten und einem Reibungsmodell erfolgt. Dadurch wird die Regelung noch genauer.

Entsprechend wird in der Feedforward-Struktur die geschätzte Reibkraft auf die Stellgröße der Zahnstange addiert.

Vorzugsweise erfolgt die Reibungskraftkompensation und/oder die Störgrößenkompensation mittels eines nicht-linearen adaptiven Schätzers, insbesondere einem Kalmanfilter. Und es ist bevorzugt, wenn die Feedback-Struktur einen linearen quadratischen Regler aufweist, sodass sich beide nicht beeinträchtigen und der Regler die Zahnstangenposition entsprechend einstellen kann beziehungsweise Nicht-Linearitäten in der Feedforward-Struktur berücksichtigt werden und lineare Systeme in der Feedback-Struktur.

Es ist vorteilhaft, wenn der geschätzte Haftreibungs-Koeffizient als Input in den Zahnstangenkraft-Schätzer einfließt.

Bevorzugt wird der Haftreibungs-Koeffizient dem Reibungsmodell als Input zusammen mit der vom Zahnstangenkraft-Schätzer geschätzten Zahnstangengeschwindigkeit zugeführt.

In einer bevorzugten Ausführungsform kompensiert das Reibmodell die Reibungskraft und das daraus resultierende Drehmoment wird auf die geschätzte Zahnstangenkraft und auf die Stellgröße zur Ansteuerung der Zahnstange aufaddiert. Die geschätzte Zahnstangenkraft wird zuvor mittels eines mechanisch bestimmten Umrechnungsfaktors auf Motorebene in ein geschätztes Zahnstangendrehmoment umgerechnet.

Das Reibmodell ist vorzugsweise ein asymmetrisches, modifiziertes dynamisches Reibmodell, insbesondere ein Lund-Grenoble Reibmodell.

Es ist weiterhin ein Verfahren zur Steuerung eines Steer-by-Wire-Lenksystems für ein Kraftfahrzeug umfassend:
- einen auf gelenkte Räder wirkenden elektronisch regelbaren Lenksteller,
- eine Ansteuereinheit,
- einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als
Reaktion auf den Fahrerwunsch und einen Fahrzustand des Kraftfahrzeugs ausgibt,
- eine Signalübertragung, die den Fahrerwunsch an die Ansteuereinheit übermittelt,
- wobei die Ansteuereinheit den Lenksteller ansteuert, um den Fahrerwunsch in eine Auslenkung der gelenkten Räder zu transformieren, wobei die Ansteuereinheit ein Modul zur Regelung der Zahnstangenposition aufweist, welches die Zahnstangenposition mittels des zuvor beschriebenen Verfahrens regelt.

Außerdem ist ein entsprechendes Steer-by-Wire-Lenksystem für ein Kraftfahrzeug vorgesehen, welches dazu eingerichtet ist, das zuvor beschriebene Verfahren auszuführen.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: ein Blockdiagramm einer Steuerung des Steer-by-Wire-Lenksystems mit einem Modul zur Regelung der Zahnstangenposition,
- Fig. 3:: ein Blockdiagramm einer Regelung der Zahnstangenposition, sowie
- Fig. 4:: ein Blockdiagramm einer weiteren Regelung der Zahnstangenposition mit Zahnstangen-Reibungsmodell und Zahnstangen-Reibungsschätzungseinheit.

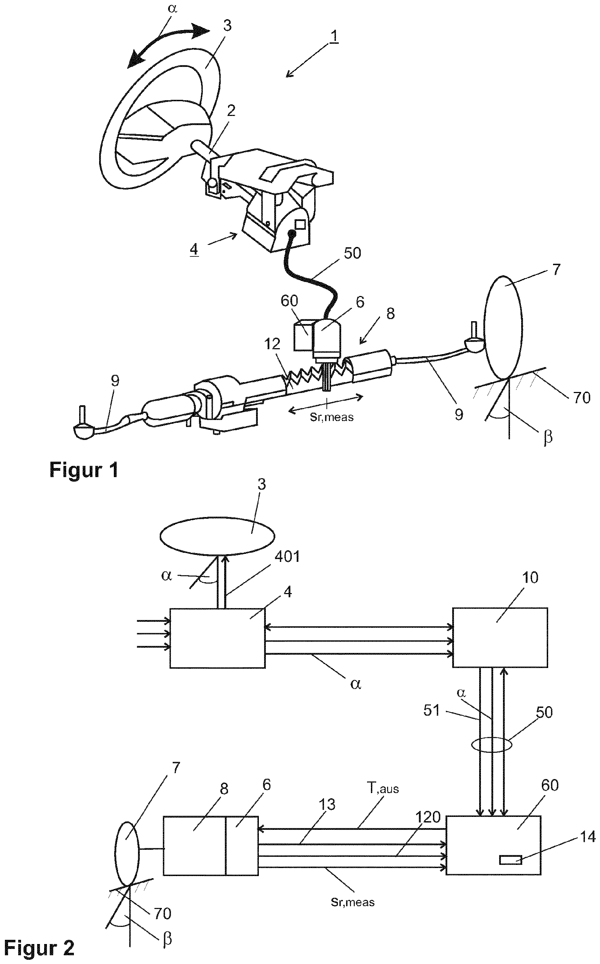

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel a, welcher als Lenkrad-Drehwinkel oder Fahrerlenkwunsch bezeichnet werden kann, erfasst. Es kann aber zusätzlich auch ein Lenkmoment erfasst werden. Als Lenkeingabemittel kann ein Joy-Stick dienen. Des Weiteren ist an der Lenkwelle 2 ein Feedback-Aktuator 4 angebracht, welcher dazu dient, die Rückwirkungen von der Fahrbahn 70 auf das Lenkrad 3 zu simulieren, beispielsweise durch ein Rückstellmoment 401 oder Widerstandsmoment, das auf das Lenkrad 3 aufgeprägt wird, und somit dem Fahrer eine Rückmeldung über das Lenk- und Fahrverhalten des Fahrzeugs zu geben. Der Fahrerlenkwunsch wird über den vom Drehwinkelsensor gemessenen Lenkrad-Drehwinkel α der Lenkwelle 2 über Signalleitungen an eine Feedback-Aktuator-Monitoreinheit 10 übertragen, wie dies in der Figur 2 veranschaulicht ist. Der Lenkrad-Drehwinkel α kann dabei mehrere Umdrehungen, beispielsweise einen Bereich von -720° bis +720° aufweisen, wobei 0° den Wunsch des Geradeausfahrens repräsentiert. Die Feedback-Aktuator-Monitoreinheit 10 überträgt den Fahrerlenkwunsch über den aufgeprägten Lenkrad-Drehwinkel α an eine Ansteuereinheit 60. Die Feedback-Aktuator-Monitoreinheit 10 übernimmt bevorzugt auch die Ansteuerung des Feedback-Aktuators 4. Die Feedback-Aktuator-Monitoreinheit 10 kann auch integral mit der Ansteuereinheit 60 ausgebildet sein. Die Ansteuereinheit 60 steuert in Abhängigkeit von dem Signal des Drehwinkelsensors sowie weiteren Eingangsgrößen mit einer Stellgröße T,ₐᵤₛ einen elektrischen Lenksteller 6 an, welcher die Stellung von gelenkten Fahrzeugrädern 7 steuert. Der Lenksteller 6 wirkt über ein Lenkstangen-Lenkgetriebe 8, wie beispielsweise einem Zahnstangen-Lenkgetriebe, sowie über Spurstangen 9 und anderen Bauteilen mittelbar auf die gelenkten Fahrzeugräder 7 und verschwenkt diese mit einem Radlenkwinkel β.

Figur 2 zeigt eine Steuerung des Steer-by-Wire-Lenksystems. Der Feedback-Aktuator 4 empfängt Signale, unter anderem von dem Drehwinkelsensor, der den Lenkrad-Drehwinkel a, die Lenkwinkelbeschleunigung und die Lenkwinkelgeschwindigkeit am Lenkrad 3 misst und speichert. Der Feedback-Aktuator 4 kommuniziert mit einer Feedback-Aktuator-Monitoreinheit 10, die den Feedback-Aktuator 4 steuert. Die Feedback-Aktuator-Monitoreinheit 10 empfängt weiterhin über Signalleitungen 50 Fahrbahninformationen 13 von einer Ansteuereinheit 60 des Lenkstellers 6, wie beispielsweise den Fahrbahnzustand oder einen Fahrzeuglenkwinkel. Die Ansteuerungseinheit 60 empfängt von der Feedback-Aktuator-Monitoreinheit 10 über die Signalleitung 50 fahrerseitige Lenkbefehle 51, wie den Lenkrad-Drehwinkel a.

Die Ansteuereinheit 60 ermittelt in einem Modul 14 zur Regelung der Zahnstangenposition in Abhängigkeit des Fahrerlenkwunsches und anderen Signalen, welche die Feedback-Aktuator-Monitoreinheit 10 überträgt, eine Soll-Zahnstangenposition Sᵣ,_{des} und eine Soll-Zahnstangengeschwindigkeit Vᵣ,_{des} einer Zahnstange 12, sodass daraus das gewünschte Drehmoment oder die Stellgröße T,_{des} für den elektrischen Lenksteller 6 bestimmt werden kann. Alternativ zur Zahnstangenposition kann der Radlenkwinkel β der gelenkten Räder 7 zur Ermittlung der Stellgröße verwendet werden. Aus der Stellgröße T,_{des} wird der Radlenkwinkel β zur Verschwenkung der gelenkten Fahrzeugräder 7, sowie weitere Größen, die die Ansteuereinheit 60 ermittelt hat, bestimmt.

Messwerte 120 von dem Lenksteller 6 und dem Lenkgetriebe 8, wie beispielsweise die an der Zahnstange 12 gemessene Kraft, der Radlenkwinkel, und Fahrbahninformationen 13, sowie die Zahnstangenposition s_{r,meas} werden an die Ansteuereinheit 60 weiter gegeben.

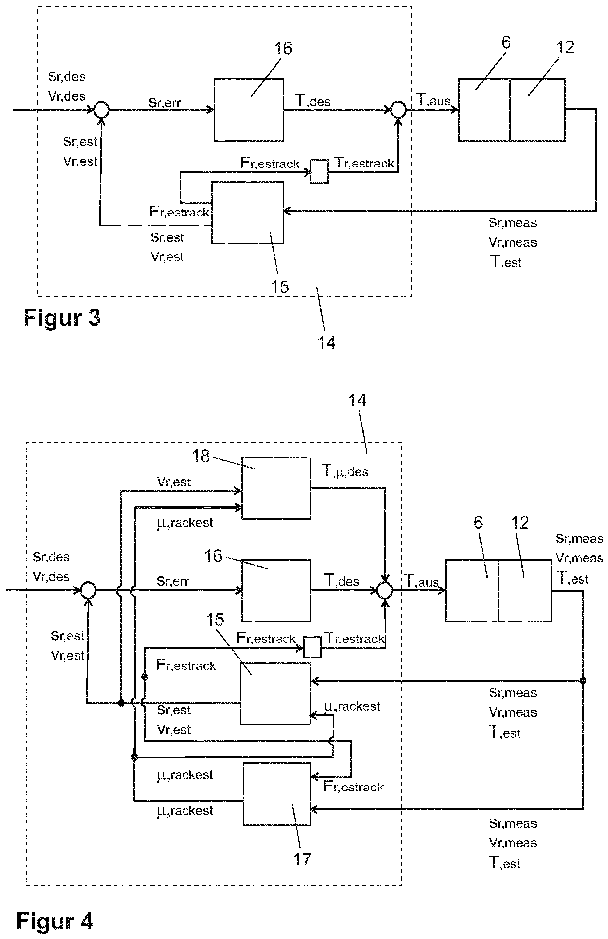

Zwei Ausführungsformen des Moduls 14 zur Regelung der Zahnstangenposition sind in den Figuren 3 und 4 gezeigt.

Wie in Figur 3 dargestellt ist, erhält das Modul 14 zur Regelung der Zahnstangenposition 14 Soll-Zahnstangenwerte als Input. Dazu gehören die Soll-Zahnstangenposition sᵣ,_{des} und die Soll-Zahnstangengeschwindigkeit v_{r,des}. Eine Zahnstangenkraft-Schätzeinheit 15 schätzt neben der Zahnstangenkraft F_{r,est} auch die Zahnstangenposition s_{r,est} und die Zahnstangengeschwindigkeit v_{r,est}. Aus der Differenz zwischen den Soll-Werten und Schätz-Werten der Zahnstangenposition und der Zahnstangengeschwindigkeit wird ein Positionsfehler s_{r,err} ermittelt, woraus ein Regler 16 zunächst eine Stellgröße T,_{des,} welche einem Soll-Drehmoment entspricht, für die Ansteuerung der Zahnstange 12 bestimmt. Die geschätzte Zahnstangenkraft F_{r,estrack} (=Störgröße, nicht linearer Teil des Solldrehmoments) wird mittels eines mechanisch bestimmten Umrechnungsfaktors auf Motormomentebene umgerechnet, sodass daraus ein geschätztes Zahnstangendrehmoment T_{r,estrack} bestimmt wird, welcher auf die zunächst bestimmte Stellgröße T,_{des} aufaddiert und damit die tatsächlich auszugebende Stellgröße T,ₐᵤₛ bestimmt, die dann an den Lenksteller 6 zur Ansteuerung der Zahnstange 12 weitergegeben wird. An der Zahnstange 12 wird die aktuelle Zahnstangenposition s_{r,meas}, die Zahnstangengeschwindigkeit vᵣ,ₘₑₐₛ gemessen und ein geschätztes Solldrehmoment T_{,est} an der Zahnstange 12 ermittelt. Diese Werte s_{r,meas}, vᵣ,ₘₑₐₛ und T_{,est} werden der Zahnstangenkraft-Schätzeinheit 15 als Input zugeführt.

Die Zahnstangenkraft-Schätzeinheit 15 arbeitet mit nichtlinearen Schätzmethoden (EKF), während der Regler 16 (Linear Quadratic Regulator (LQR)) mit linearen Methoden arbeitet, sodass sich beide nicht beeinträchtigen und der Regler 16 die Zahnstangenposition entsprechend einstellen kann.

In der Figur 4 ist ein Modul zur Regelung der Zahnstangenposition 14, entsprechend Figur 3 gezeigt, dass jedoch für eine bessere Genauigkeit um eine Zahnstangen-Reibungsschätzungseinheit 17 und ein Zahnstangen-Reibungsmodell 18 erweitert wurde.

Der Schätzer der Zahnstangen-Reibungsschätzungseinheit 17 ist wie der Zahnstangenkraft-Schätzer der Zahnstangenkraft-Schätzeinheit 15 ein nicht linearer adaptiver Schätzer und erhält als Input die gemessene Zahnstangenposition s_{r,meas,} die gemessene Zahnstangengeschwindigkeit v_{r,meas} und das geschätzte Soll-Drehmoment T_{,est} sowie die geschätzte Zahnstangenkraft F_{r,estrack} und bildet daraus einen Haftreibungs-Koeffizienten µ_{,rackest} (Stribeck Reibung). Der Haftreibungs-Koeffizient wird dem Reibungsmodell 18 als Input zusammen mit der vom Zahnstangenkraft-Schätzer 15 geschätzten Zahnstangengeschwindigkeit v_{r,est} zugeführt. Das Reibmodell kompensiert die Reibungskraft und bestimmt daraus ein Drehmoment T_{µ,des}, welches aus der geschätzten Zahnstangenkraft F_{r,estrack} (=Störgröße, nicht linearer Teil des Solldrehmoments) mittels des mechanisch bestimmten Umrechnungsfaktors auf Motormomentebene in das geschätzte Zahnstangendrehmoment T_{r,estrack} umgerechnet wird und auf die zunächst bestimmte Stellgröße T,_{des} aufaddiert und so die tatsächlich auszugebende Stellgröße T,ₐᵤₛ bestimmt, die dann dem Lenksteller zugeführt wird. Somit werden die nicht-linearen Eigenschaften und die unbekannten Störgrößen des Systems kompensiert. Die übrig gebliebene lineare Dynamik des Systems wird mit dem linearen quadratischen Regler 16 (LQR) effektiv geregelt. Der LQR basiert auf einem linearen Zahnstangenmodell, in das die Masse, die Dämpfung, und die Steifigkeit der Zahnstange einfließen und das bevorzugt Positionsfehler, Geschwindigkeitsfehler, und Positionsintegralfehler der Zahnstange umfasst.

Das Zahnstangen-Reibungsmodell besteht aus einem statischen, Haft- und Gleitreibung umfassenden Modell oder einem dynamischen Reibungsmodell (beispielsweise LuGre-Modell).

Der Haft-Reibungskoeffizient µ_{,rackest} fließt weiterhin als weiterer Input neben s_{r,meas}, vᵣ,ₘₑₐₛ und T_{,est} in den Zahnstangenkraft-Schätzer 15 ein.

Die Zahnstangenposition, Zahnstangengeschwindigkeit, die Störgröße und Reibungskraft werden kontinuierlich in der jeweiligen Schätzungseinheit mit einem Kalmanfilter geschätzt. Das Konzept eines Kalmanfilters betrifft ein Verfahren zum Schätzen der zeitlichen Entwicklung nicht-linearer Systeme, mittels welchem Störungen von einem Messsignal entfernt werden können. Der Filter benötigt hierzu ein Modell des zu schätzenden Systems.

## Patentansprüche

1. Verfahren zur Zahnstangenpositionsregelung für ein Steer-by-Wire-Lenksystem (1) für ein Kraftfahrzeug, wobei ein Modul (14) zur Regelung einer Zahnstangenposition vorgesehen ist, **dadurch gekennzeichnet, dass** das Modul (14) in einer Feedback Struktur aus den Differenzen zwischen Soll-Werten und Schätz-Werten der Zahnstangenposition (s_{r,des},s_{r,est}) und einer Zahnstangengeschwindigkeit (v_{r,des},v_{r,est}) einen Positionsfehler (s_{r,err}) ermittelt, woraus eine Stellgröße (T_{,des}) für eine Ansteuerung einer Zahnstange (12) bestimmt wird, und dass in einer Feedforward Struktur eine Störgrößenkompensation der Stellgröße (T_{,des}) durch Zahnstangenkraftschätzung erfolgt.

2. Verfahren nach Anspruch 1, **dadurch gekennzeichnet, dass** in einer weiteren Feedforward Struktur eine Reibungskraftkompensation der Stellgröße (T_{,des}) mittels Schätzung von Haftreibungs-Koeffizienten (µ_{,rackest}) und einem Reibungsmodell (18) erfolgt.

3. Verfahren nach Anspruch 2, **dadurch gekennzeichnet, dass** die Reibungskraftkompensation und/oder die Störgrößenkompensation mittels nichtlinearem adaptiven Schätzer erfolgen.

4. Verfahren nach einem der vorhergehenden Ansprüche, **dadurch gekennzeichnet, dass** die Feedback Struktur einen linearen quadratischen Regler (16) aufweist.

5. Verfahren nach einem der vorhergehenden Ansprüche 2 bis 4, **dadurch gekennzeichnet, dass** der geschätzter Haftreibungs-Koeffizient (µ_{,rackest}) als Input in einen Zahnstangenkraft-Schätzer (15) einfließt.

6. Verfahren nach einem der vorhergehenden Ansprüche 2 bis 5, **dadurch gekennzeichnet, dass** der Haftreibungs-Koeffizient (µ_{,rackest}) dem Reibungsmodell (18) als Input zusammen mit der vom Zahnstangenkraft-Schätzer (15) geschätzten Zahnstangengeschwindigkeit (v_{r,est}) zugeführt wird.

7. Verfahren nach einem der vorhergehenden Ansprüche 2 bis 6, **dadurch gekennzeichnet, dass** das Reibmodell (18) die Reibungskraft kompensiert und daraus ein Drehmoment (T_{µ,des}) bestimmt, welches auf die geschätzte Zahnstangenkraft (F_{r,estrack}) und auf die Stellgröße (T_{,des}) zur Ansteuerung der Zahnstange (12) aufaddiert wird.

8. Verfahren nach einem der vorhergehenden Ansprüche 2 bis 7, **dadurch gekennzeichnet, dass** das Reibmodell (18) ein asymmetrisches, modifiziertes dynamisches Reibmodell ist.

9. Verfahren zur Steuerung eines Steer-by-Wire-Lenksystems für ein Kraftfahrzeug umfassend:
- einen auf gelenkte Räder (7) wirkenden elektronisch regelbaren Lenksteller (6),
- eine Ansteuereinheit (60),
- einen Feedback-Aktuator (4), der über ein Lenkeingabemittel (3) von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Signalübertragung, die den Fahrerwunsch an die Ansteuereinheit (60) übermittelt,
- wobei die Ansteuereinheit (60) den Lenksteller (6) ansteuert, um den Fahrerwunsch in eine Auslenkung der gelenkten Räder (7) zu transformieren, **dadurch gekennzeichnet, dass** die Ansteuereinheit (60) ein Modul (14) zur Regelung der Zahnstangenposition aufweist, welches die Zahnstangenposition mittels eines Verfahrens nach einem der Ansprüche 1 bis 8 regelt.

10. Steer-by-Wire-Lenksystem (1) für ein Kraftfahrzeug umfassend:
- einen auf gelenkten Räder (7) wirkenden elektronisch regelbaren Lenksteller (6),
- eine Ansteuereinheit (60),
- einen Feedback-Aktuator (4), der über ein Lenkeingabemittel (3) von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Einrichtung zur Signalübertragung, die den Fahrerwunsch an die Ansteuereinheit (60) übermittelt,
- wobei die Ansteuereinheit (60) den Lenksteller (6) ansteuert, um den Fahrerwunsch in eine Auslenkung der gelenkten Räder (7) zu transformieren, **dadurch gekennzeichnet, dass** das Steer-by-Wire-Lenksystem (1) dazu eingerichtet ist, ein Verfahren nach einem der Ansprüche 1 bis 9 auszuführen.

## Claims

1. A method for rack-and-pinion position adjustment for a steer-by-wire steering system (1) for a motor vehicle, wherein a module (14) is provided for adjusting the rack-and-pinion position, **characterized in that** the module determines a position error (s_{r,err}) from the differences between the desired and estimated values of the rack-and-pinion position (s_{r,des}, s_{r,est}) and a rack-and-pinion speed (v_{r,des}, v_{r,est}) in a feedback structure, from which a control variable (T_{,des}) is determined for controlling a rack-and-pinion (12), and that a disturbance variable compensation for the control variable (T_{,des}) is carried out in a feedforward structure by means of a rack-and-pinion force estimation.

2. The method as claimed in claim 1, **characterized in that** a friction force compensation of the control variable (T_{,des}) is carried out in another feedforward structure by means of an estimation of the coefficient of static friction (µ_{,rackest}) and a friction model (18).

3. The method as claimed in claim 2, **characterized in that** the friction force compensation and/or the disturbance variable compensation is carried out by means of a non-linear adaptive estimator.

4. The method as claimed in one of the preceding claims, **characterized in that** the feedback structure comprises a linear quadratic regulator (16).

5. The method as claimed in one of the preceding claims 2 to 4, **characterized in that** the estimated coefficient of static friction (µ_{,rackest}) is included as input in a rack-and-pinion force estimator (15).

6. The method as claimed in one of the preceding claims 2 to 5, **characterized in that** the coefficient of static friction (µ_{,rackest}) is supplied to the friction model (18) as input, together with the rack-and-pinion speed (v_{r,est}) estimated by the rack-and-pinion force estimator (15).

7. The method as claimed in one of the preceding claims 2 to 6, **characterized in that** the friction model (18) compensates for the friction force and determines a torque (T_{µ,des}) therefrom, which is added to the estimated rack-and-pinion force (F_{r,estrack}) and to the control variable (T_{,des}) for controlling the rack-and-pinion (12).

8. The method as claimed in one of the preceding claims 2 to 7, **characterized in that** the friction model (18) is an asymmetrical, modified, dynamic friction model.

9. A method for controlling a steer-by-wire steering system for a motor vehicle, comprising:
- an electronically adjustable steering adjuster (6) acting on steered wheels (7),
- a control unit (60),
- a feedback actuator (4), which may be actuated via a steering input means (3) by a driver with a driver's request for a steering angle, and emits a feedback signal to the steering input means as a reaction to the driver's request and a vehicle state of the motor vehicle,
- a signal transmission, which transmits the driver's request to the control unit (60),
- wherein the control unit (60) controls the steering adjuster (6) in order to transform the driver's request into a deflection of the steered wheels (7), **characterized in that** the control unit (60) comprises a module (14) for adjusting the rack-and-pinion position which adjusts the rack-and-pinion position by means of a method as claimed in one of claims 1 to 8.

10. A steer-by-wire steering system (1) for a motor vehicle, comprising:
- an electronically adjustable steering adjuster (6) acting on steered wheels (7),
- a control unit (60),
- a feedback actuator (4), which may be actuated via a steering input means (3) by a driver with a driver's request for a steering angle, and emits a feedback signal to the steering input means as a reaction to the driver's request and a vehicle state of the motor vehicle,
- a device for signal transmission, which transmits the driver's request to the control unit (60),
- wherein the control unit (60) controls the steering adjuster (6) in order to transform the driver's request into a deflection of the steered wheels (7), **characterized in that** the steer-by-wire steering system (1) is designed to carry out a method as claimed in one of claims 1 to 9.

## Revendications

1. Procédé de régulation de la position de crémaillère pour un système de direction à commande par fil (1) pour un véhicule automobile, un module (14) destiné à réguler un position de crémaillère étant présent, **caractérisé en ce que** le module (14), dans une structure de rétroaction, identifie une erreur de position (s_{r,err}) à partir des différences entre les valeurs de consigne et les valeurs estimées des positions de crémaillère (s_{r,des}, s_{r,est}) et d'une vitesse de crémaillère (v_{r,des}, v_{r,est}), à partir de quoi est déterminée une grandeur de réglage (T_{,des}) pour une commande d'une crémaillère (12), et **en ce qu'**une compensation de grandeurs perturbatrices de la grandeur de réglage (T_{,des}) est effectuée dans une structure à action directe par estimation de la force de crémaillère.

2. Procédé selon la revendication 1, **caractérisé en ce qu'**une compensation de force de frottement de la grandeur de réglage (T_{,des}) est effectuée dans une structure à action directe supplémentaire au moyen de l'estimation de coefficients de frottement par adhérence (µ_{,rackest}) et d'un modèle de frottement (18).

3. Procédé selon la revendication 2, **caractérisé en ce que** la compensation de force de frottement et/ou la compensation de grandeurs perturbatrices sont effectuées au moyen d'estimateurs adaptatifs non linéaires.

4. Procédé selon l'une des revendications précédentes, **caractérisé en ce que** la structure de rétroaction possède un régulateur quadratique linéaire (16).

5. Procédé selon l'une des revendications précédentes 2 à 4, **caractérisé en ce que** le coefficient de frottement par adhérence (µ_{,rackest}) estimé intervient comme entrée dans un estimateur de force de crémaillère (15).

6. Procédé selon l'une des revendications précédentes 2 à 5, **caractérisé en ce que** le coefficient de frottement par adhérence (µ_{,rackest}) est acheminé en tant qu'entrée au modèle de frottement (18) conjointement avec la vitesse de crémaillère (v_{r,est}) estimée par l'estimateur de force de crémaillère (15).

7. Procédé selon l'une des revendications précédentes 2 à 6, **caractérisé en ce que** le modèle de frottement (18) compense la force de frottement et détermine à partir de celle-ci un couple (T_{µ,des}) qui est additionné à la force de crémaillère estimée (F_{r,estrack}) et à la grandeur de réglage (T_{,des}) en vue de commander la crémaillère (12) .

8. Procédé selon l'une des revendications précédentes 2 à 7, **caractérisé en ce que** le modèle de frottement (18) est un modèle de frottement asymétrique dynamique modifié.

9. Procédé de commande d'un système de direction à commande par fil pour un véhicule automobile, comprenant :
- un actionneur de direction (6) à régulation électronique qui agit sur des roues directrices (7),
- une unité de commande (60),
- un actionneur de rétroaction (4), qui peut être sollicité par un conducteur, par le biais d'un moyen d'entrée de direction (3), avec un souhait de conducteur pour un angle de braquage et délivre en sortie un signal de rétroaction au moyen d'entrée de direction en réaction au souhait de conducteur et un état de déplacement du véhicule automobile,
- une transmission de signal, qui communique le souhait de conducteur à l'unité de commande (60),
- l'unité de commande (60) commandant l'actionneur de direction (6) afin de transformer le souhait de conducteur en une déviation des roues directrices (7), **caractérisé en ce que** l'unité de commande (60) possède un module (14) destiné à la régulation de la position de crémaillère, lequel régule la position de crémaillère au moyen d'un procédé selon l'une des revendications 1 à 8.

10. Système de direction à commande par fil (1) pour un véhicule automobile, comprenant :
- un actionneur de direction (6) à régulation électronique qui agit sur les roues directrices (7),
- une unité de commande (60),
- un actionneur de rétroaction (4), qui peut être sollicité par un conducteur, par le biais d'un moyen d'entrée de direction (3), avec un souhait de conducteur pour un angle de braquage et délivre en sortie un signal de rétroaction au moyen d'entrée de direction en réaction au souhait de conducteur et un état de déplacement du véhicule automobile,
- un dispositif de transmission de signal, qui communique le souhait de conducteur à l'unité de commande (60),
- l'unité de commande (60) commandant l'actionneur de direction (6) afin de transformer le souhait de conducteur en une déviation des roues directrices (7), **caractérisé en ce que** le système de direction à commande par fil (1) est conçu pour mettre en œuvre un procédé selon l'une des revendications 1 à 9.
